# EUROPÄISCHE PATENTSCHRIFT

(11) **EP 1 389 686 B1**
(45) Veröffentlichungstag und Bekanntmachung des Hinweises auf die Patenterteilung: **01.06.2005**
(21) Anmeldenummer: 03007173.2
(22) Anmeldetag: 28.03.2003
(51) Int. Cl.: F15B 20/00

(54) **Elektrohydraulischer Bremsmodul**
Electro-hydraulic brake module
Module de freinage électrohydraulique

(30) Priorität: 13.08.2002 DE 20212459 U
(43) Veröffentlichungstag der Anmeldung: 18.02.2004
(73) Patentinhaber: HAWE Hydraulik GmbH & Co. KG, 81673 München (DE)
(72) Erfinder: Heusser, Martin, Dipl.-Ing., Univ., 81245 München (DE)
(74) Vertreter: Grünecker, Kinkeldey, Stockmair & Schwanhäusser Anwaltssozietät

(56) Entgegenhaltungen:
- EP-A- 0 908 413
- DE-A- 4 140 408
- DE-A- 19 515 884
- US-A- 4 548 296
- US-A- 5 611 199

## Beschreibung

Die Erfindung betrifft einen elektrohydraulischen Bremsmodul der im Oberbegriff des Anspruchs 1 angegebenen Art.

Bekannte Windkraftanlagen weisen eine hydraulisch betätigbare Bremse auf, um den Rotor stillzusetzen, gegebenenfalls bei gleichzeitiger Rotorblattverstellung. Die Bremse wird auch betätigt, wenn im Netz, an das die Windkraftanlage angeschlossen ist, ein Ausfall auftritt, weil dann die Rotordrehzahl unerwünscht ansteigen würde, und mit ihr die Drehzahl des stromerzeugenden Generators. Nach Beseitigung des Netzausfalls wird die Bremse gelöst. Der Rotor läuft erst langsam wieder bis auf eine Drehzahl hoch, die der Soll-Drehzahl des Generators entspricht. Dies bedeutet eine signifikante Verzögerung für die Stromlieferung, insbesondere wenn viele Windkraftanlagen verzögert wieder an das Netz gefahren werden müssen.

Aus DE 195 15 884 A ist es bekannt, bei einer CNC-Antriebseinheit eine modulierbare Bremse vorzusehen. Die Bremse lässt sich zwischen einer vollen Bremsstellung und einer ausgerückten Stellung verstellen, und in einem Bremszustand halten, bei dem das Bremsmoment nur einen Bruchteil des Antriebsdrehmoments der Antriebseinheit beträgt, so dass die Antriebseinheit langsam angefahren werden kann, ohne die Sicherheitseinrichtung außer Funktion setzen zu müssen. Die Bremse arbeitet mit festgelegtem Schlupf und ohne proportionale Regelung.

Bei einem aus DE-A-41 40 408 bekannten Hubmodul für einen Stapler sind zwei 2/2-Proportional-Regelventile für das Heben und Senken einer Last verantwortlich. Es handelt sich dabei um druckvorgesteuerte Regelventile in Sitzventilbauart. An die für Heben und Senken benutzte Arbeitsleistung ist ein Drucksensor angeschlossen. Ein Bremszylinder ist nicht vorgesehen. Eine Abbremsung der Last erfolgt über eine gesteuerte Druckmitteldrosselung bis zur Blockage, Beide Regelventile werden zum Heben oder Senken ausschließlich wechselweise elektrisch betätigt.

Ein aus US 4 548 296 A bekannter Hubmodul für ein Hubwerk ist für Hebebetrieb und Senkbetrieb mit Magnetventilen ausgestattet. Eine Bremsvorrichtung ist nicht vorgesehen.

Der Erfindung liegt die Aufgabe zugrunde, einen elektrohydraulischen Bremsmodul für eine Windkraftanlage anzugeben, der baulich einfach und funktionssicher ist und eine proportionale Bremssteuerung ermöglicht, die zumindest bei einem Netzausfall die Generator-Soll-Drehzahl hält.

Die gestellte Aufgabe wird mit den Merkmalen des Anspruchs 1 gelöst.

Bei einem Netzausfall wird nach Maßgabe der Drehzahl Druckmittel über das Umschaltventil in die Arbeitsleitung eingespeist und/oder über das Regelventil aus der Arbeitsleitung zum Tank abgelassen, um die Bremswirkung proportional zu modulieren, wobei das Proportional-Druckbegrenzungs-Regelventil die Ablasssteuerung so vomimmt, dass die Soll-Drehzahl des Generators gehalten wird. Die beiden Ventile sind einfach, betriebssicher und kostengünstig. Der Bremsmodul spricht schnell an und hält die Soll-Drehzahl präzise. Die Sitzventilbauweise stellt sicher, dass in der jeweiligen Absperrstellung keine Leckage auftritt. Das Proportional-Druckbegrenzungs-Regelventil regelt sozusagen hohen Ist-Bremsdruck bis auf den Soll-Bremsdruck, während niedriger Ist-Bremsdruck über das Umschaltventil im Zusammenspiel mit dem Einfluss des Proportional-Druckbegrenzungs-Regelventils bis auf den Soll-Bremsdruck gebracht wird.

Zweckmäßig ist die elektronische Steuervorrichtung eine mit einem Drehzahlsensor eines zu bremsenden Maschinenelements und einem Drucksensor in der Arbeitsleitung verbundene Programmsteuervorrichtung, die über eine Stromsteuerleitung den dem Bremsdruck entsprechenden Strom für den Proportionalmagneten, und über die Spannungssteuerleitung eine Steuerspannung zum Erregen oder Entregen des Schwarz/Weiß-Magneten einstellt, um z.B. bei Ausfall des Netzes, an das die Windkraftanlage angeschlossen ist, für das Maschinenelement eine Drehzahlbegrenzung auf die Soll-Drehzahl des Generators einzuregeln. Mit den beiden einfachen Ventilen wird eine proportionale Bremsmodulation erzielt, die es ermöglicht, das Maschinenelement, d.h. den Generator der Windkraftanlage, bei einem Netzausfall exakt mit der Soll-Drehzahl weiterlaufen zu lassen, bis die Netzstörung beseitigt ist, so dass die volle Stromlieferung ohne spürbare Verzögerung fortgesetzt werden kann.

Zweckmäßig sind stromauf des Proportional-Druckbegrenzungs-Regelventils und des Umschaltventils Drosseln vorgesehen, von denen die Drossel beim Umschaltventil kleiner als die Drossel beim Proportional-Druckbegrenzungs-Regelventil ist. Dadurch wird ein zu hoher Bremsdruck vermieden. Das Proportional-Druckbegrenzungs-Regelventil und das Umschaltventil sind jeweils aus der Arbeitsleitung druckvorgesteuert. Dies ermöglicht dem Proportional-Druckbegrenzungs-Regelventil eine selbsttätige Druckregelfunktion. Beim Umschaltventil unterstützt die Druckvorsteuerung ggfs. den Schalteingriff des Schwarz/Weiß-Magneten. Das Umschaltventil ist zusätzlich auch von der Druckquelle her druckvorgesteuert, um rasche Umschaltvorgänge zu erzielen. Die Druckvorsteuerung des Umschaltventils ist jedoch kein Muss.

Bei Windkraftanlagen gibt es unterschiedliche Bremskonzepte. Entweder wird die Bremsstellung bzw. die Bremskraft durch die Feder des Federspeicher-Bremszylinders erzeugt und die Bremslösestellung bzw. Verringerung des Bremsdrucks durch hydraulische Beaufschlagung des Bremszylinders gegen die Feder herbeigeführt, oder es wird die Bremsstellung bzw. Bremskraft durch die hydraulische Beaufschlagung des Bremszylinders gegen die Kraft der Feder herbeigeführt und die Lösestellung durch die Feder eingestellt. Diesen Konzepten kann der erfindungsgemäße Bremsmodul problemlos Rechnung tragen, wobei die beiden vorerwähnten Konzepte so modifizierbar sind, dass bei entregten Magneten und die Bremsstellung einstellender Feder des Bremszylinders entweder die maximale Bremsstellung oder die volle Lösestellung eingestellt sind, bzw. bei für die Lösestellung verantwortlicher Feder des Bremszylinders bei entregten Magneten entweder die volle Bremsstellung oder die volle Bremslösestellung eingehalten wird.

Bei einem Bremszylinder, der hydraulisch gegen die Feder entweder zur Bremslösestellung oder zur Bremsstellung verstellbar ist, ist das Proportional-Druckbegrenzungs-Regelventil durch den Proportionalmagneten aus einer Durchgangsstellung zum Tank in Richtung zu einer Absperrstellung betätigbar, während das Umschaltventil durch den Schwarz/Weiß-Magneten aus einer Absperrstellung in eine Durchgangsstellung betätigbar ist. Die Konsequenz dieser Ausbildung ist, dass bei hydraulisch gegen die Feder zur Bremslösestellung verstellbarem Bremszylinder bei entregten Magneten die volle Bremsstellung eingestellt wird, während bei hydraulisch gegen die Feder zur Bremsstellung verstellbarem Bremszylinder bei entregten Magneten die volle Lösestellung eingestellt wird.

Hingegen ist bei einem Bremszylinder, der hydraulisch gegen die Feder entweder zur Bremsstellung oder zur Lösestellung verstellbar ist, jeweils das Proportional-Druckbegrenzungs-Regelventil durch den Proportionalmagneten aus einer Absperrstellung zu einer Durchgangsstellung zum Tank, und das Umschaltventil durch den Schwarz/Weiß-Magneten aus einer Durchgangsstellung zu einer Absperrstellung betätigbar. Die Konsequenz dieser Ausbildung ist, dass bei hydraulisch gegen die Feder zur Bremsstellung verstellbarem Bremszylinder bei entregtem Magneten die volle Bremsstellung eingestellt wird, während bei einem hydraulisch gegen die Feder zur Lösestellung verstellbaren Bremszylinder bei entregtem Magneten die volle Lösestellung eingestellt wird.

Anhand der Zeichnung werden Ausführungsformen des Erfindungsgegenstandes erläutert. Es zeigen:
- Fig. 1: als Blockschaltbild eine Windkraftanlage mit einem elektrohydraulischen Bremsmodul, in einer ersten Ausführungsform,
- Fig. 2: den Bremsmodul in einer zweiten Ausführungsform,
- Fig. 3: den Bremsmodul in einer dritten Ausführungsform, und
- Fig. 4: den Bremsmodul in einer vierten Ausführungsform.

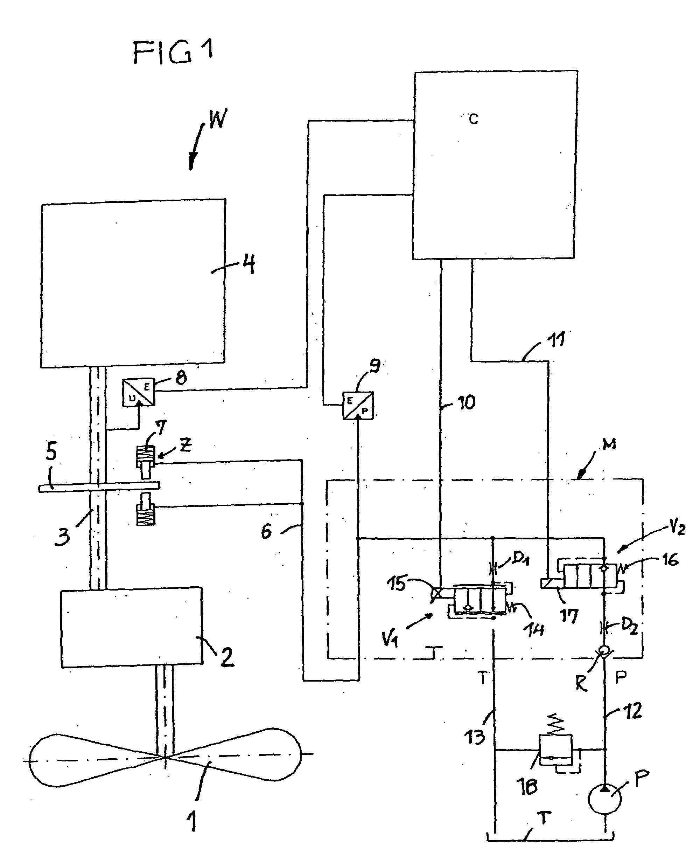

Eine Windkraftanlage W in Fig. 1 weist einen Rotor 1 auf, der über ein Getriebe 2 und eine Welle 3 einen Generator 4 treibt. Beispielsweise auf der Welle 3 ist eine Bremsscheibe 5 angeordnet, mit der wenigstens ein Bremszylinder Z, bei der gezeigten Ausführungsform mindestens zwei gegensinnig arbeitende Bremszylinder Z, zusammenwirkt. Jeder Bremszylinder Z ist ein sogenannter Federspeicher-Bremszylinder, der eine Feder 7 (z.B. mehrere Ring- oder Plattenfedem oder dgl.) enthält, und gegen die Kraft der Feder 7 hydraulisch aus einer Arbeitsleitung 6 beaufschlagbar ist. Ein Drehzahlsensor 8 greift die Drehzahl der Welle 3 bzw. des Generators 4 ab und übermittelt mit der Drehzahl korrespondierende Signale an eine elektronische Steuervorrichtung C, bei der gezeigten Ausführungsform eine Programmsteuervorrichtung. Ferner ist an die Arbeitsleitung 6 ein Drucksensor 9 angeschlossen, der dem Druck in der Arbeitsleitung 6 entsprechende Signale (Ist-Bremsdruck-Information) an die Programmsteuervorrichtung C übermittelt.

Der Bremszylinder Z lässt sich mittels eines elektrohydraulischen Bremsmoduls M proportional verstellen.

Die Bremsmodule M der ersten bis vierten Aüsführungsformen sind ähnlich konzipiert und variieren nur in Details, die sich nach dem jeweiligen Bremskonzept der Windkraftanlage richten.

In jeder Ausführungsform des Bremsmoduls M sind ein Proportional-Druckbegrenzungs-Regelventil V1 zur Ablasssteuerung aus der Arbeitsleitung 6 zu einem Tank T und parallel dazu ein zwischen einer Absperrstellung und einer Durchgangsstellung umstellbares Umschaltventil V2 zur Einspeisung von Druckmittel in die Arbeitsleitung 6 aus einer Druckquelle P (Pumpe, oder Pumpe mit Druckspeicher) vorgesehen. Die beiden Ventile V1, V2 sind Sitzventile, d.h. sie sind in ihrer jeweiligen Absperrstellung leckagefrei dicht.

Von der Programmsteuervorrichtung C führt eine Stromsteuerleitung 10 zu einem Proportional magneten 15 des Ventils V1, und eine Spannungssteuerleitung 11 zu einem Schwarz/Weiß-Umschaltmagneten 17 des Ventils V2. Das Proportional-Druckbegrenzungs-Regelventil V1 ist über eine Tankleitung 13 mit dem Tank T verbunden, aus dem die Pumpe P ansaugt, die über eine Druckleitung 12 an das Umschaltventil V2 angeschlossen ist.

In der ersten Ausführungsform in Fig. 1 ist das Proportional-Druckbegrenzungs-Regelventil V1 so ausgelegt, dass der Proportionalmagnet 15 in Abhängigkeit vom Wert des auf der Stromsteuerleitung 10 vorliegenden Strom das Ventil aus einer durch eine Regelfeder 14 gehaltenen Durchgangsstellung in Richtung zu einer Absperrstellung zum Tank verstellt. Durch die parallelen Linien im Symbol des Ventils V1 ist hervorgehoben, dass das Ventil V1 eine Regelfunktion hat. Stromauf des Proportional-Druckbegrenzungs-Regelventils V1 ist eine Drossel D1 vorgesehen, während stromauf des Umschaltventils V2 eine Drossel D2 vorgesehen ist. Die Drossel D2 ist kleiner als die Drossel D1. Beispielsweise hat die Drossel D2 einen Durchmesser von 0,5 mm.

Das Proportional-Druckbegrenzungs-Regelventil V1 ist aus der Arbeitsleitung 6 druckvorgesteuert, und zwar parallel zur Regelfeder 14. D.h. die Regelfeder 14 und die Druckvorsteuerung aus der Arbeitsleitung 15 wirken entgegen der Kraft des Proportionalmagneten 15.

Das Umschaltventil 16 wird durch eine Umschaltfeder 16 in der gezeigten Absperrstellung gehalten und lässt sich bei Erregen des Schwarz/Weiß-Magneten 17 in eine Durchgangsstellung umschalten. Das Umschaltventil V2 ist aus der Arbeitsleitung 6 parallel zur Kraft des Schwarz/Weiß-Magneten 17 und auch aus der Druckleitung 12 parallel zur Umschaltfeder 16 jeweils druckvorgesteuert. Stromauf der Drossel D2 ist ein in Strömungsrichtung zur Pumpe P sperrendes Rückschlagventil R vorgesehen.

Zwischen dem Rückschlagventil R und der Pumpe ist zwischen die Druckleitung 12 und die Tankleitung 13 ein Systemdruck-Begrenzungsventil 18 gesetzt.

Die Bremszylinder Z werden in Fig. 1 durch die Federn 7 in Richtung zur Bremsstellung verstellt. Mittels des in der Arbeitsleitung 6 eingesteuerten Bremsdrucks lassen sich die Bremswirkung proportional modulieren oder die volle Lösestellung hydraulisch einstellen.

In der in Fig. 1 gezeigten Betriebsstellung sind beide Magneten 15, 17 stromlos. Da das Umschaltventil V2 in der Absperrstellung steht, hingegen das Proportional-Druckbegrenzungs-Regelventil V1 in der Durchgangsstellung zum Tank, ist die Arbeitsleitung 6 druckentlastet. Die Bremszylinder Z sind in der vollen Bremsstellung.

Bei normalem Betrieb der Windkraftanlage W werden der Proportionalmagnet 15 voll bestromt und der Schwarz/Weiß-Magnet 17 erregt. Das Proportional-Druckbegrenzungs-Regelventil V1 nimmt seine Absperrstellung ein, während das Umschaltventil V2 in seiner Durchgangsstellung ist. Der maximale, durch das Druckbegrenzungsventil 18 eingestellte Bremsdruck hält die Bremszylinder Z in ihren vollen Lösestellungen. Die Programmsteuervorrichtung C überwacht anhand der Signale der Sensoren 8, 9 die Drehzahl des Generators 4 und den Druck in der Arbeitsleitung 6. Sollte die Drehzahl des Generators unerwünscht hoch laufen, z.B. bei Ausfall des Netzes, an den die Windkraftanlage W angeschlossen ist, so wird ggfs. der Schwarz/Weiß-Magnet 17 entregt (Umschaltventil V2 geht in die Absperrstellung) und wird der Strom für den Proportionalmagneten 15 auf einen Wert eingestellt, der einem Bremsdruck in der Arbeitsleitung 6 entspricht, mit dem die Drehzahl des Generators bei der Soll-Drehzahl gehalten wird. Das Proportional-Druckbegrenzungs-Regelventil V1 lässt gerade so viel Druckmittel aus der Arbeitsleitung 6 zum Tank T abströmen, dass der gewünschte Bremsdruck in der Arbeitsleitung 6 eingestellt und die Drehzahl des Generators 4 gehalten wird. Dabei regelt das Proportional-Druckbegrenzungs-Regelventil V1 mit Hilfe des Vorsteuerdrucks aus der Arbeitsleitung 6. Der Ist-Bremsdruck wird so an einen niedrigeren Soll-Bremsdruck herangeführt. Sollte der Ist-Bremsdruck unter den Soll-Bremsdruck fallen, dann wird der Schwarz/Weiß-Magnet 17 erregt und das Umschaltventil V2 in seine Durchgangsstellung umgeschaltet, um Druckmittel in die Arbeitsleitung 6 einzuspeisen, und im Zusammenspiel mit dem Proportional-Druckbegrenzungs-Regelventil V1 den Ist-Bremsdruck an den dann höheren Soll-Bremsdruck heranzuführen. Sobald ein Gleichgewichtszustand erreicht ist, wird ggfs. der Schwarz/Weiß-Magnet 17 wieder entregt. Die proportionale Modulation der Bremswirkung könnte auch bei permanent erregtem Schwarz/Weiß-Magneten 17 vorgenommen werden, da die Drossel D2 kleiner ist als die Drossel D1.

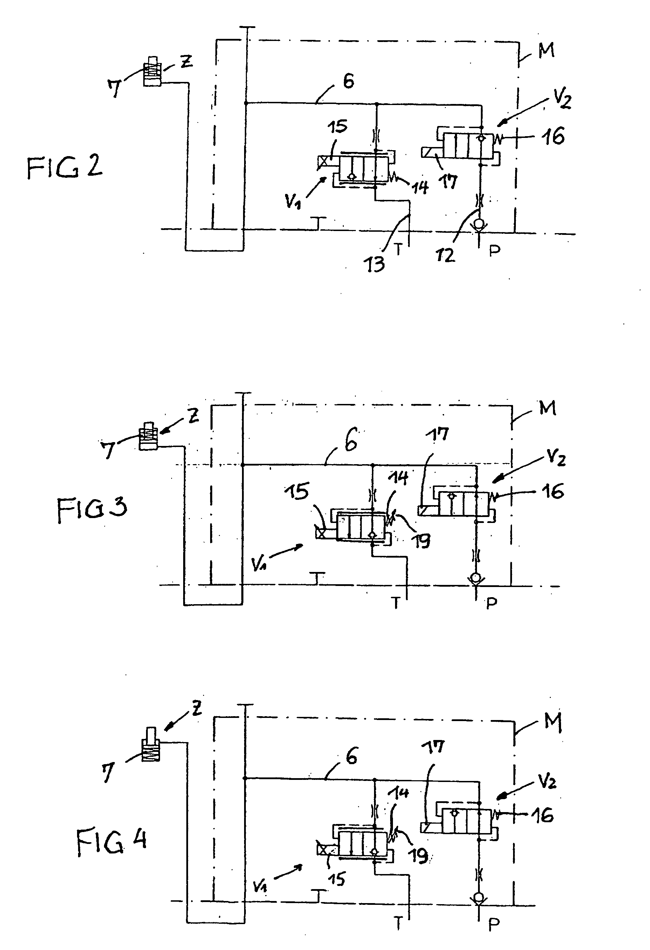

Die zweite Ausführungsform des Bremsmoduls M in Fig. 2 ist für ein Bremskonzept ausgelegt, bei dem die Bremsstellung hydraulisch durch Beaufschlagen des Bremszylinders Z gegen die Feder 7 eingestellt wird. Bei entregten Magneten 15, 17 ist die volle Lösestellung eingestellt. Zum Einstellen eines Soll-Bremsdrucks in der Arbeitsleitung 6 werden zunächst der Proportionalmagnet 15 mit einem Stromwert korrespondierend mit dem Soll-Bremsdruck bestromt und der Schwarz/Weiß-Magnet 17 erregt, um Druckmittel einzuspeisen, bis im Zusammenspiel mit dem Proportional-Druckbegrenzungs-Regelventil V1 der Soll-Bremsdruck erzeugt und gehalten wird. Tritt eine Drehzahländerung auf, so verändert die Programmsteuervorrichtung C zumindest den Stromwert für den Proportionalmagneten 15. ggfs. wird auch der Magnet 17 entregt oder erregt.

In der dritten Ausführungsform in Fig. 3 ist ein Bremskonzept gewählt, bei dem ähnlich wie in Fig. 2 die Bremsstellung des Bremszylinders Z hydraulisch eingestellt wird, und die Bremslösestellung durch die Feder 7 bewirkt wird. Bei entregten Magneten 15, 17 wird hier die volle Bremsstellung mit maximalem Bremsdruck eingestellt, weil das Proportional-Druckbegrenzungs-Regelventil V1 in seiner Absperrstellung steht, während das Umschaltventil V2 in seiner Durchgangsstellung ist. Zum Einstellen des Soll-Bremsdruckes erhält der Proportional-Magnet 15 einen mit dem Soll-Bremsdruck korrespondierenden Strom. Der Schwarz/Weiß-Magnet 17 kann erregt werden, um die Absperrstellung einzustellen, muss jedoch nicht, da die eingespeiste Menge geringer ist als die maximal abzulassende Menge. Wegen des hohen Vorsteuerdrucks aus der Arbeitsleitung 6 nimmt das Proportional-Druckbegrenzungs-Regelventil V1 zunächst seine volle Durchgangsstellung ein, ehe es mit abnehmendem Druck in der Arbeitsleitung 6 den Soll-Bremsdruck einregelt.

Bei der Regelfeder 14 in Fig. 3 ist eine Verstellvorrichtung 19 für die Faden-Vorspannung vorgesehen, um diesen auf den maximalen Bremsdruck in der Arbeitsleitung 6 so einzustellen, dass bei nicht bestromtem Proportionalmagneten 15 der Vorsteuerdruck das Ventil V1 nicht in die Durchgangsstellung verstellen kann.

In der vierten Ausführungsform in Fig. 4 ist ein Bremskonzept ähnlich wie in Fig. 1 gewählt, d.h., die Feder 7 des Bremszylinders Z ist für die Bremsstellung verantwortlich, während die hydraulische Beaufschlagung den Bremsdruck gegen die Feder 7 moduliert. Bei entregten Magneten 15, 17 ist die volle Lösestellung eingestellt, da in der Arbeitsleitung 6 der maximale Bremsdruck herrscht. Um einen Soll-Bremsdruck einzustellen, erhält der Proportionalmagnet 15 einen mit den Soll-Bremsdruck korrespondierenden Stromwert. Dank des hohen Vorsteuerdrucks aus der Arbeitsleitung 6 (das Umschaltventil V2 kann dann bereits in die Absperrstellung geschaltet sein, muss jedoch nicht), nimmt das Ventil V1 seine volle Durchgangsstellung ein, um den Ist-Bremsdruck auf den Soll-Bremsdruck zu reduzieren Da dann der Vorsteuerdruck abnimmt, regelt das Ventil V1 den Soll-Bremsdruck ein, bis es schließlich seine Absperrstellung einnimmt.

Obwohl die Auslegung der Ausführungsformen des Bremsmoduls in den Fig. 1 bis 4 variiert, basiert jede Ausführungsform auf denselben Ventilkomponenten, d.h. es können zumindest weitgehend identische Ventilblöcke verwendet werden. Die beiden Ventile V1, V2 könnten in einem Block zusammengefasst werden, wie durch die strichpunktierten Rechtecke in den Fig. angedeutet wird, und zwar zusammen mit den Drosseln, den Magneten und den Federn.

Das Proportional-Druckbegrenzungs-Regelventil könnte so ausgestaltet sein, dass der Proportional magnet direkt auf die Regelfeder einwirkt und deren Vorspannung verändert.

## Patentansprüche

1. Elektrohydraulischer Bremsmodul (M), insbesondere für eine Windkraftanlage (W), mit wenigstens einem Federspeicher-Bremszylinder (Z), dessen hydraulische Druckbeaufschlagung gegen die Feder (7) durch eine mit einer elektronischen Steuervorrichtung (C) verbundene Ventilbaugruppe gesteuert wird, und der einem zu bremsenden Maschinenelement (3, 4, 5) zugeordnet ist **dadurch gekennzeichnet, dass** der Bremsmodul (M) zur proportionalen Bremssteuerung zumindest bei Ausfall des Windkraftmaschinen-Netzes zur Ablasssteuerung zu einem Tank (T) ein durch einen Proportionalmagneten (15) betätigbares Druckbegrenzungs-Regelventil (V1) und zur Einspeisesteuerung aus einer Druckquelle (P) ein durch einen Schwarz/Weiß-Magneten (17) betätigbares Umschaltventil (V2), jeweils in Sitzventilbauweise, in Parallelschaltung in einer Arbeitsleitung (6) zum Bremszylinder (Z) aufweist, und
dass die elektrische Steuervorrichtung (C) eine mit einem Drehzahlsensor (8) des zu bremsenden Maschinenelements (3, 4, 5) und einem Drucksensor (9) in der Arbeitsleitung (6) verbundene Programmsteuerung ist, und dass zwischen der Programmsteuerung und dem Proportionalmagneten (15) eine Stromsteuerleitung (10) und zwischen der Programmsteuerung und dem Schwarz/Weiß-Magneten (17) eine Spannungssteuerleitung (11) vorgesehen sind, über die die Programmsteuervorrichtung zumindest bei Ausfall des Windkraftmaschinen-Netzes durch Strom- und Spannungsänderungen für das Maschinenelement (3, 4, 5) eine Drehzahlbegrenzung auf eine Soll-Drehzahl proportional einregelt.

2. Bremsmodul nach Anspruch 1, **dadurch gekennzeichnet, dass** stromauf des Druckbegrenzungs-Regelventils (V1) und stromauf des Umschaltventils (V2) je eine Drossel (D1, D2) vorgesehen ist, dass die Drossel (D2) stromauf des Umschaltventils (V2) kleiner ist als die andere Drossel (D1), und dass das Druckbegrenzungs-Regelventil (V1) und das Umschaltventil (V2) jeweils aus der Arbeitsleitung (6) und das Umschaltventil (V2) zusätzlich auch von der Druckquelle (P) her druckvorgesteuert sind.

3. Bremsmodul nach wenigstens einem der Ansprüche 1 und 2, **dadurch gekennzeichnet, dass** bei einem Bremszylinder (Z), der hydraulisch gegen die Feder (7) entweder zur Bremslösestellung oder zur Bremsstellung verstellbar ist, das Druckbrenzungs-Regelventil (V1) durch den Proportionalmagneten (15) aus einer Durchgangsstellung zum Tank (T) in Richtung zu einer Absperrstellung, und das Umschaltventil (V2) durch den Schwarz/Weiß-Magneten (17) aus einer Absperrstellung in eine Durchgangsstellung betätigbar sind.

4. Bremsmodul nach wenigstens einem der Ansprüche 1 und 2, **dadurch gekennzeichnet, dass** bei einem Bremszylinder (Z), der hydraulisch gegen die Feder (7) entweder zur Bremslösestellung oder zur Bremsstellung verstellbar ist, das Druckbegrenzungs-Regelventil (V1) durch den Proportionalmagneten (15) aus einer Absperrstellung in Richtung zu einer Durchgangsstellung zum Tank (T) und das Umschaltventil (V2) durch den Schwarz/Weiß-Magneten (17) aus einer Durchgangsstellung zu einer Absperrstellung betätigbar sind.

## Claims

1. Electrohydraulic braking module (M), in particular for a wind energy installation (W), having at least one spring energy store braking cylinder (Z) whose hydraulic pressure applied to the spring (7) is controlled by a valve assembly which is connected to an electronic control apparatus (C) and which is associated with a machine element (3, 4, 5) to be braked, **characterized in that** the braking module (M) (for proportional braking control at least in the event of failure of the wind energy machine network) has a pressure limiting control valve (V1), which can be operated by a proportional magnet (15), for blow-out control to a tank (T)), and has a switching valve (V2) which can be operated by a black/white magnet (17) for feed control from a pressure source (P), with the switching valve (V2) in each case being in the form of a seat valve and being connected in parallel in an operating line (6) to the braking cylinder (Z), and **in that** the electrical control apparatus (C) is a program controller which is connected to a rotation speed sensor (8) for the machine element (3, 4, 5) to be braked and to a pressure sensor (9) in the operating line (6), and **in that** a current control line (10) is provided between the program controller and the proportional magnet (15), and a voltage control line (11) is provided between the program controller and the black/white magnet (17), via which the program control apparatus provides proportional regulation. in order to limit the rotation speed to a required rotation speed by current and voltage changes for the machine element (3, 4, 5), at least in the event of failure of the wind energy machine network.

2. Braking module according to Claim 1, **characterized in that** a restrictor (D1, D2) is in each case provided upstream of the pressure limiting control valve (V1) and upstream of the switching valve (V2), **in that** the restrictor (D2) upstream of the switching valve (V2) is smaller than the other restrictor (D1), and **in that** the pressure limiting control valve (V1) and the switching valve (V2) are in each case subject to pressure pilot control from the operating line (6), and the switching valve (V2) is additionally subject to pressure pilot control from the pressure source (P) as well.

3. Braking module according to at least one of Claims 1 and 2, **characterized in that**, in the case of a braking cylinder (Z) which can be moved hydraulically with respect to the spring (7) either to the brake release position or to the braking position, the pressure limiting control valve (V1) can be operated by the proportional magnet (15) from a position in which it provides a passage to the tank (T) in the direction of a shut-off position, and the switching valve (V2) can be operated by the black/white magnet (17) from a shut-off position to a position in which it provides a passage.

4. Braking module according to at least one of Claims 1 and 2, **characterized in that**, in the case of a braking cylinder (Z) which can be moved hydraulically with respect to the spring (7) either to the brake release position or to the braking position, the pressure limiting control valve (V1) can be operated by the proportional magnet (15) from a shut-off position in the direction to a position in which it provides a passage to the tank (T), and the switching valve (V2) can be operated by the black/white magnet (17) from a position in which it provides a passage to a shut-off position.

## Revendications

1. Module de freinage électrohydraulique (M), en particulier pour une installation éolienne, (W) comportant au moins un vérin de freinage à ressort accumulateur (Z) dont la charge en pression contre le ressort (7) est commandée par un sous-ensemble de vanne relié à un dispositif de commande (C) électronique et auquel est associé un élément de machine (3, 4, 5) à freiner, **caractérisé en ce que** le module de freinage (M) pour la commande de freinage proportionnelle présente, au moins en cas de défaillance du réseau d'éoliennes, une vanne de régulation à limitation de pression (V1) pouvant être actionnée par un aimant proportionnel (15) pour la commande de délestage vers une cuve (T) et une vanne de commutation (V2) pouvant être actionnée par un aimant tout ou rien (17) pour la commande d'alimentation à partir d'une source de pression (P), réalisées chacune comme vanne à siège, montées en parallèle dans une conduite de travail (6) menant au vérin de freinage, et que le dispositif de commande (C) électrique est une commande à programme reliée à un capteur de vitesse de rotation (8) de l'élément de machine (3, 4, 5) à freiner et à un capteur de pression (9) dans la conduite de travail (6), et que sont prévues, entre la commande à programme et l'aimant magnétique (15), une conduite de commande de courant (10) et, entre la commande à programme et l'aimant tout ou rien (17), une ligne de commande de tension (11), par lesquelles le dispositif de commande à programme, au moins en cas de défaillance du réseau d'éoliennes, règle pour l'élément de machine (3, 4, 5) une limitation de la vitesse de rotation sur une vitesse de rotation de consigne, par des variations de courant et de tension.

2. Module de freinage selon la revendication 1, **caractérisé en ce qu'**une bobine d'inductance (D1, D2) est prévue à chaque fois en amont de la vanne de régulation à limitation de pression (V1) et en amont de la vanne de commutation (V2), que la bobine d'inductance (D2) en amont de la vanne de commutation (V2) est plus petite que l'autre bobine d'inductance (D1), et que la vanne de régulation à limitation de pression (V1) et la vanne de commutation (V2) sont pilotées en pression chacune à partir de la ligne de travail (6) et la vanne de commutation (V2) en supplément à partir de la source de pression (P).

3. Module de freinage selon l'une au moins des revendications 1 et 2, **caractérisé en ce que**, dans le cas d'un vérin de freinage (Z) qui est réglable hydrauliquement contre le ressort (7) soit vers la position de desserrage de frein soit vers la position de freinage, la vanne de régulation à limitation de pression (V1) peut être actionnée par l'aimant proportionnel (15) d'une position de passage vers la cuve (T) en direction d'une position de blocage, et la vanne de commutation (V2) par l'aimant tout ou rien (17) d'une position de blocage dans une position de passage.

4. Module de freinage selon l'une au moins des revendications 1 et 2, **caractérisé en ce que**, dans le cas d'un vérin de freinage (Z) qui est réglable hydrauliquement contre le ressort (7) soit vers la position de desserrage de frein soit vers la position de freinage, la vanne de régulation à limitation de pression (V1) peut être actionnée par l'aimant proportionnel (15) d'une position de blocage en direction d'une position de passage vers la cuve (T) et la vanne de commutation (V2) par l'aimant tout ou rien (17) d'une position de passage dans une position de blocage.
